# EUROPÄISCHE PATENTSCHRIFT

(11) **EP 1 939 056 B1**
(45) Veröffentlichungstag und Bekanntmachung des Hinweises auf die Patenterteilung: **08.06.2011**
(21) Anmeldenummer: 07120771.6
(22) Anmeldetag: 15.11.2007
(51) Int. Cl.: B60S 1/04, F16F 1/373, F16F 1/376

(54) **Entkopplungseinrichtung zur elastischen Verbindung zweier Teile miteinander**
Decoupling device for elastic connection of two parts to one another
Dispositif de découplage destiné à la liaison élastique de deux pièces

(30) Priorität: 27.12.2006 DE 102006061633
(43) Veröffentlichungstag der Anmeldung: 02.07.2008
(73) Patentinhaber: ROBERT BOSCH GMBH, 70442 Stuttgart (DE)
(72) Erfinder: Heller, Joachim, 77815, Buehl (DE); Kraus, Achim, 77815, Buehl (DE)

(56) Entgegenhaltungen:
- DE-A1- 10 035 633
- DE-A1- 19 916 304
- FR-A- 2 135 551
- US-A- 5 472 226

## Beschreibung

Die Erfindung betrifft eine Entkopplungseinrichtung zur elastischen Verbindung von einem ersten Teil mit einem zweiten Teil, insbesondere für ein Fahrzeug, vorzugsweise Kraftfahrzeug, mit einem aus einem elastischen Material bestehenden Entkopplungselement, das zwischen den beiden Teilen angeordnet ist, wobei das Entkopplungselement an dem ersten Teil gehalten ist und eine nutförmige Aufnahmevertiefung aufweist, in die das zweite Teil mit einem Einsetzabschnitt eingreift, wobei die nutförmige Aufnahmevertiefung - im Querschnitt gesehen - am Nutgrund und an mindestens einer Nutwandung zueinander mit Abstand liegende Entkopplungselementvorsprünge aufweist und eine zwischen den Entkopplungselementvorsprüngen liegende Zone der Aufnahmevertiefung eine Hinterschneidung bildet, und wobei der Einsetzabschnitt eine mit dem zugeordneten Entkopplungselementvorsprung zusammenwirkende Stirnfläche aufweist.

### Stand der Technik

Eine derartige Entkopplungseinrichtung ist bekannt (Siehe z.B. DE 100 35 633 A, Figur 6). Sie wird zum Beispiel zur elastischen Befestigung von Fahrzeugkomponenten wie zum Beispiel einer Wischerantriebseinrichtung an Karosserieelementen des Fahrzeugs genutzt. Dabei wird die Fahrzeugkomponente von dem Karosserieelement entkoppelt, sodass Kräfte oder Impulse nur gedämpft übertragen werden. Das Entkopplungselement wird dabei von einem ersten Teil - zum Beispiel von einem mit dem Karosserieelement verbundenen Teil oder einem Teil des Karosserieelements - karosseriefest gehalten. Zur Aufnahme eines Einsetzabschnittes eines zweiten Teils - beispielsweise eines Abstützelements der Fahrzeugkomponente - besitzt ein zwischen den Teilen angeordnetes Entkopplungselement eine nutförmige Aufnahmevertiefung, in die der Einsetzabschnitt eingreift. Weiterhin weist das Entkopplungselement Entkopplungselementvorsprünge auf, die steife Bereiche entstehen lassen, zwischen denen dünnere und damit flexiblere Bereiche des Entkopplungselements entstehen. Die Formgebung des Entkopplungselements ist dabei so gewählt, dass zum Halten der beiden Teile am Entkopplungselement steifere Bereiche und zur Gewährleistung der Elastizität dünnere und damit elastischere Bereiche ausgebildet sind. Die nutförmige Aufnahmevertiefung des Entkopplungselements weist dabei einen Nutgrund und sich bis zu dem Nutgrund erstreckende Nutwandungen auf. Ein Teil der Entkopplungselementvorsprünge sind zum sicheren Halten des zweiten Teils in der Aufnahmevertiefung angeordnet. Diese Entkopplungselementvorsprünge sind am Nutgrund und an mindestens einer Nutwandung zueinander mit Abstand angeordnet. Mit diesen Entkopplungselementvorsprüngen wirkt der Einsetzabschnitt des zweiten Teils zusammen. Der Einsetzabschnitt des zweiten Teils weist eine Stirnfläche auf, die mit dem Entkopplungselementvorsprung am Nutgrund der Aufnahmevertiefung zusammenwirkt. Zwischen den Vorsprüngen in der Aufnahmevertiefung befindet sich mindestens eine Zone der Aufnahmevertiefung, die mindestens eine Hinterschneidung bildet. Diese Hinterschneidung wirkt nicht mit dem Einsetzabschnitt des zweiten Teils zusammen. Durch die zwischen den Teilen wirkenden Kräfte und Momente im Betrieb, sowie aufgrund der durch das erste Teil eingeleiteten Fahrzeugvibrationen verschleißt das Entkopplungselement an den Entkopplungselementvorsprüngen in der Aufnahmevertiefung.

### Offenbarung der Erfindung

Bei der erfindungsgemäßen Entkopplungseinrichtung, wie sie in Anspruch 1 definiert wird, ist vorgesehen, dass der Einsetzabschnitt zur Vergrößerung seiner Stirnfläche in die Hinterschneidung mit einem Einsetzabschnittsvorsprung hineinragt. Bei einer Relativbewegung des in eine nutförmige Aufnahmevertiefung eines Entkopplungselements eingesetzten Einsetzabschnitts eines zweiten Teils relativ zu dem von einem ersten Teil gehaltenen Entkopplungselements in Richtung einer der Nutwandungen der Aufnahmevertiefung wirkt die vergrößerte Stirnfläche auch bei einem in Richtung der Nutwandung verschobenen Einsetzabschnitt immer vollflächig mit dem Entkopplungselementvorsprung des Nutgrunds zusammen. Durch das Zusammenwirken auf voller Fläche (Kontaktfläche) steigt der Druck bei einer in Richtung des Nutgrunds gerichteten Belastung durch das zweite Teil nicht zusätzlich durch Verringerung der Kontaktfläche an. Der Verschleiß an dem Entkopplungselement bei ausgelenkten ersten Teil nimmt somit nicht zu. Mit Vorteil ist dabei vorgesehen, dass der Einsetzabschnitt zur Vergrößerung seiner Stirnfläche mit dem Einsetzabschnittsvorsprung ganz oder teilweise die Hinterschneidung hineinragt.

Weiterhin ist vorgesehen, dass die Aufnahmevertiefung zwei Nutwandungen aufweist, die beide mit jeweils einem Entkopplungselementvorsprung versehen sind, wobei zwischen den Entkopplungselementvorsprüngen des Nutgrundes und den Entkopplungselementvorsprüngen der Nutwandungen jeweils eine Zone der Aufnahmevertiefung liegt, die jeweils eine Hinterschneidung bildet. Somit kann der Einsetzabschnitt mit den Entkopplungselementvorsprüngen der einander gegenüberliegenden Nutwandungen und dem Entkopplungselementvorsprung am Nutgrund der Aufnahmevertiefung zusammenwirken. Dabei sind die Entkopplungselementvorsprünge als Wülste ausgebildet, die sich entlang der nutförmigen Aufnahmevertiefung erstrecken.

Es ist vorgesehen, dass der Einsetzabschnitt zur Vergrößerung seiner Stirnfläche in die Hinterschneidungen mit Einsetzabschnittsvorsprüngen hineinragt. Diese haben eine Kontur mit der sie vollflächig mit den Hinterschneidungen in der Aufnahmevertiefung des Entkopplungselements zusammenwirken können. Durch dieses vollflächige Zusammenwirken wird der Druck auf das Entkopplungselement verringert.

Insbesondere ist vorgesehen, dass die Entkopplungselementvorsprünge einstückig mit dem Entkopplungselement ausgebildet sind. Ist das Entkopplungselement aus einem einheitlichen elastischen Material gefertigt, so ergeben sich die elastischen und die steifen Abschnitte des Entkopplungselements nur durch die Formgebung. Dabei sind die Abschnitte mit Entkopplungselementvorsprüngen steifere Abschnitte des Entkopplungselements als die Zonen der Aufnahmevertiefung, die die Hinterschneidungen bilden.

Nach einer Weiterbildung der Erfindung ist vorgesehen, dass der Einsetzabschnittsvorsprung beziehungsweise die Einsetzabschnittsvorsprünge einstückig am Einsetzabschnitt ausgebildet ist/sind.

Mit Vorteil ist vorgesehen, dass das Entkopplungselement als rotationssymmetrisches Bauteil ausgebildet ist. Dabei ist das Entkopplungselement vorzugsweise im Wesentlichen kreiszylinderförmig oder ringförmig ausgebildet sein, wobei das Entkopplungselement die nutförmige Aufnahmevertiefung vorzugsweise in seiner Mantelfläche ausgebildet aufweist. Alternativ ist mit Vorteil vorgesehen, dass das Entkopplungselement als ovales Bauteil ausgebildet ist. Derartig geformte Entkopplungselemente sind bekannt, wobei das Entkopplungselement die nutförmige Aufnahmevertiefung vorzugsweise in seiner Mantelfläche ausgebildet aufweist. Dabei schließt der Begriff Oval auch eine Geometrische Form mit zwei (parallelen) Geraden und zwei Kurven - wie bei einem Stadion - ein.

Insbesondere ist vorgesehen, dass die Aufnahmevertiefung eine Ringnut ist. Die Ringnut ist insbesondere an der Mantelfläche des weitgehend kreiszylinderförmig ausgebildeten Entkopplungselements oder des ovalen Bauteils ausgebildet und umgibt das Kopplungselement somit voll umfänglich.

Nach einer Weiterbildung der Erfindung ist vorgesehen, dass das Entkopplungselement am ersten Teil durch Eingreifen eines Haltevorsprungs des ersten Teils in einem zentralen Durchbruch des Entkopplungselements gehalten oder mit gehalten ist. Ist das Entkopplungselement ein im Wesentlichen kreiszylinderförmiges Bauteil oder ein ovales Bauteil mit einer in seiner Mantelfläche ausgebildeten Ringnut und einem zentralen Durchbruch, so weist das Entkopplungselement im Schnitt eine C-förmige Kontur auf.

Schließlich ist mit Vorteil vorgesehen, dass der Einsetzabschnitt ganz oder teilweise von einem Randbereich eines Durchbruchs oder einer randoffenen Ausnehmung des zweiten Teils gebildet ist. Das zweite Teil greift zum Beispiel mit seinem von dem Randbereich des Durchbruchs oder der randoffenen Ausnehmung gebildeten Einsetzabschnitt in die Ringnut des vorwiegend kreiszylinderförmigen Entkopplungselements oder des als ovales Bauteil ausgebildeten Entkopplungselements ein. Dabei stützt sich der Einsetzabschnitt axial an den Entkopplungselementvorsprüngen der Nutwandungen und radial an dem Entkopplungselementvorsprung des Nutgrundes ab. Weist das Entkopplungselement einen zentralen Durchbruch auf, kann dieses zum Beispiel von dem Haltevorsprung des ersten Teils durchgriffen werden. Bei entsprechender Ausformung des ersten Teils weist dieses zusätzliche Strukturen auf, die das Entkopplungselement axial abstützen und sichern.

### Kurze Beschreibung der Zeichnungen

Die Erfindung wird nachfolgend anhand der zugehörigen Zeichnungen näher erläutert. Es zeigen:
- Figur 1: eine Schnittdarstellung der erfindungsgemäßen Entkopplungseinrichtung mit einem zwischen einem ersten Teil und einem zweiten Teil angeordneten Entkopplungselement zur Verbindung der beiden Teile,
- Figur 2: das Entkopplungselement der in der Figuren 1 gezeigten Entkopplungseinrichtung und
- Figur 3: die Entkopplungseinrichtung der Figur 1 mit axial verschobenem zweiten Teil.

### Ausführungsform(en) der Erfindung

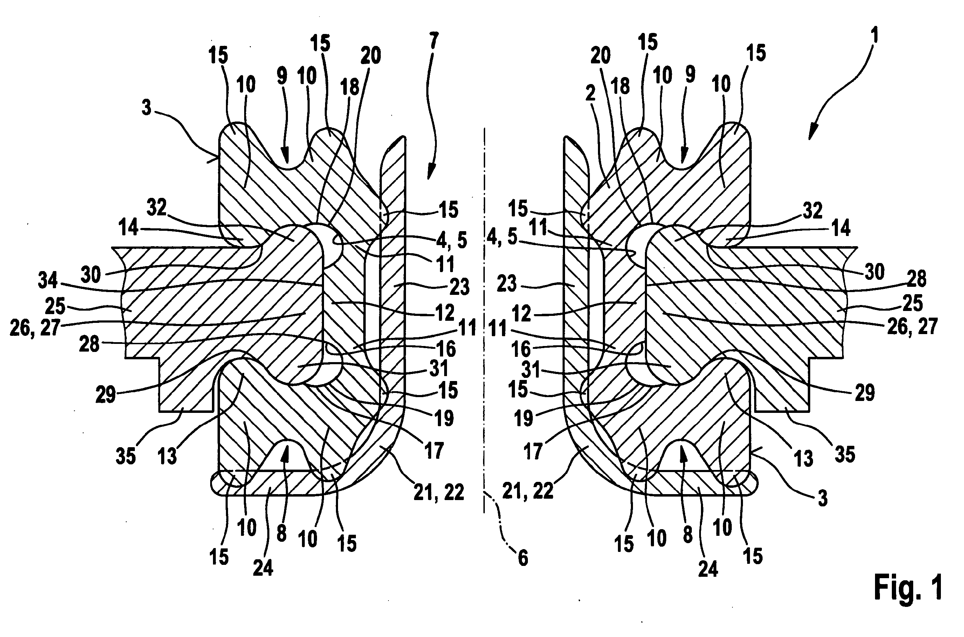

Die Figur 1 zeigt einen Schnitt durch eine erfindungsgemäße Entkopplungseinrichtung 1 mit einem weitgehend kreiszylinderförmigen Entkopplungselement 2, das an seiner Mantelfläche 3 eine als Ringnut 4 ausgebildete nutförmige Aufnahmevertiefung 5 aufweist. Das um seine Längsachse 6 rotationssymmetrische Entkopplungselement 2 bildet entlang dieser Längsachse 6 einen zentralen Durchbruch 7 aus, der sich von einer ersten Seitenfläche 8 bis zu einer der ersten Seitenfläche 8 gegenüberliegenden zweiten Seitenfläche 9 des Entkopplungselements 2 erstreckt. Das Entkopplungselement 2 ist somit als kreisringförmiges beziehungsweise weitgehend hohlzylinderförmiges Entkopplungselement 2 mit kreisförmiger Grundfläche ausgebildet. Alternativ ist das Entkopplungselement als ovales Bauteil ausgebildet (nicht dargestellt). Auch derartig geformte Entkopplungselemente sind bekannt, wobei das Entkopplungselement die nutförmige Aufnahmevertiefung vorzugsweise in seiner Mantelfläche ausgebildet aufweist. Dabei schließt der Begriff Oval auch eine Geometrische Form aus einem Rechteck ein, das an zwei gegenüberliegende Seiten durch je einen Halbkreis mit einem Durchmesser ergänzt sind, der der Seitenlänge der Seite entspricht.

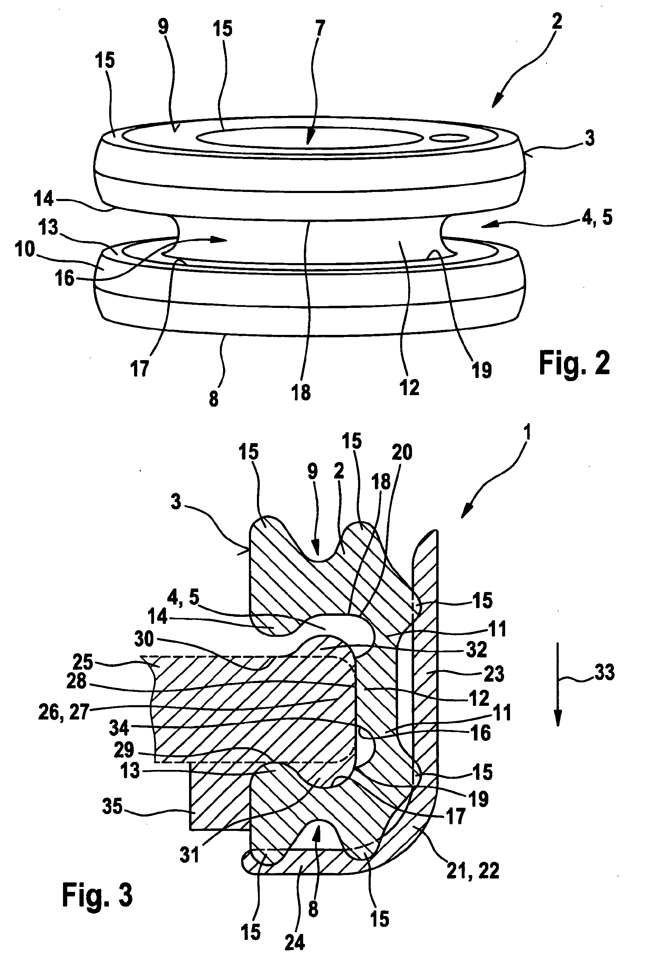

Das den Durchbruch 7 umfänglich radial umschließende Entkopplungselement 2 mit der nutartigen Aufnahmevertiefung 5 weist eine in der Schnittdarstellung der Figur 1 gezeigte, im Wesentlichen C-förmige Kontur auf. Dabei umgreift diese Kontur die nutartige Aufnahmevertiefung 5 des Entkopplungselements 2 und weist Bereiche 10 auf, deren Wandstärke deutlich größer ist als die Wandstärke anderer Bereiche 11 der Kontur. Da das Entkopplungselement 2 aus einem einheitlichen elastischen Material gefertigt ist, verleihen die stärkeren Bereiche 10 dem Entkopplungselement 2 Festigkeit und Steifigkeit, während die dünner ausgebildeten anderen Bereiche 11 eine elastische Verformung des Entkopplungselement 2 ermöglichen. Die stärker ausgebildeten Bereiche 10 werden durch Entkopplungselementvorsprüngen 12, 13, 14 in der Aufnahmevertiefung 5 und weitere Entkopplungselementvorsprünge 15 an den Seitenflächen 8, 9 und dem Durchbruch 7 gebildet. Alle Entkopplungselementvorsprünge 12, 13, 14, 15 sind dabei einstückig am Entkopplungselement 2 ausgebildet. Die Aufnahmevertiefung 5 weist dabei einen dem Durchbruch 7 zugewandten Nutgrund 16 und jeweils eine den Seitenflächen 8, 9 zugewandten Nutwandungen 17, 18 auf. Die Nutwandungen 17, 18 erstrecken sich von der Mantelfläche 3 des Entkopplungselements 2 bis zu dem Nutgrund 16. Der erste Entkopplungselementvorsprung 12 der drei Entkopplungselementvorsprünge 12, 13, 14 der Aufnahmevertiefung 5 ist am Nutgrund 16 und die zwei anderen Entkopplungselementvorsprünge 13, 14 sind an jeweils einer der Nutwandungen 17, 18 angeordnet. Dabei ist der Entkopplungselementvorsprung 12 zentral auf dem Nutgrund 16 angeordnet und die den Nutwandungen 17, 18 zugeordneten Entkopplungselementvorsprünge 13, 14 sind auf den Nutwandungen 17, 18 einander gegenüberliegend im Bereich der Mantelfläche 3 angeordnet. Durch die beabstandete Anordnung der Entkopplungselementvorsprünge 13, 14 der Nutwandungen 17, 18 und des Entkopplungselementvorsprungs 12 des Nutgrunds 16 entsteht jeweils zwischen einem der Entkopplungselementvorsprünge 13, 14 der Nutwandungen 17, 18 und dem Entkopplungselementvorsprung 12 des Nutgrunds 16 eine als Hinterschneidung 19, 20 ausgebildete Zone der Aufnahmevertiefung 5. Die Hinterschneidungen 19, 20 der nutartigen Aufnahmevertiefung 5 sind dabei im jeweiligen Grenzbereich des Nutgrunds 16 zur jeweiligen Nutwandung 17, 18 ausgebildet. Die Figur 2 zeigt das Entkopplungselement 2 in einer Gesamtansicht.

Ein als karosseriefest montierte Hülse 21 ausgebildetes erstes Teil 22 durchgreift mit einem Haltevorsprung 23 den Durchbruch 7 des Entkopplungselements 2. Ein Haltegrundelement 24 des ersten Teils 22 schließt sich unmittelbar an die erste Seitenfläche 8 an, sodass sich das Entkopplungselement 2 an diesem Haltegrundelement 24 abstützen kann. Somit wird das Entkopplungselement 2 an dem ersten Teil 22 axial und radial gehalten. Ein zweites Teil 25 greift mit einem Einsetzabschnitt 26 in die nutförmige Aufnahmevertiefung 5 des Entkopplungselements 2. Der Einsetzabschnitt 26 wird dabei an einem Randbereich 27 eines Durchbruchs des zweiten Teils 25 gebildet. Der Einsetzabschnitt 26 weist eine Stirnfläche 28 auf, die mit dem Entkopplungselementvorsprung 12 am Nutgrund 16 der Aufnahmevertiefung 5 zusammenwirkt. Somit ist die Stirnfläche 28 dem Entkopplungselementvorsprung 12 des Nutgrunds 16 zugeordnet. Der Einsetzabschnitt 26 weist am Übergang von seiner Stirnfläche 28 zu seinen Seitenflächen 29, 30 jeweils einen Einsetzabschnittsvorsprung 31, 32 auf. Die Einsetzabschnittsvorsprünge 31, 32 vergrößern die Stirnfläche 28 des Einsetzabschnitts 26 und greifen im montierten Zustand gleichzeitig in die Hinterschneidungen 19, 20 der nutförmigen Aufnahmevertiefung 5 ein. Dabei können die Einsetzabschnittsvorsprünge 31, 32 sich zum Beispiel vollumfänglich erstrecken oder beispielsweise nur an Umfangsabschnitten angeordnet sein, die mechanisch hochbelasteten Umfangsabschnitten der Aufnahmevertiefung 5 entsprechen und dort in die entsprechenden Hinterschneidungen 19, 20 hineinragen.

Es ergibt sich folgende Funktion der Entkopplungseinrichtung 1: Zur elastischen Verbindung des als karosseriefeste Hülse 21 ausgebildeten ersten Teils 22 mit dem zweiten Teil 25 wird das Entkopplungselement 2 in die Ausnehmung des zweiten Teils 25 eingebracht, wobei der Einsetzabschnitt 26 des zweiten Teils 25 in die als Ringnut 4 ausgebildete, nutförmige Aufnahmevertiefung 5 des Entkopplungselements 2 eingreift. Anschließend wird das Entkopplungselement 2 mit seinem Durchbruch 7 auf den Haltevorsprung 23 des als Hülse 21 ausgebildeten ersten Teils 22 aufgesetzt, wobei der Haltevorsprung 23 den Durchbruch 7 durchgreift. Anschließend können das erste Teil 22 und das Entkopplungselement 2 - zum Beispiel durch Verspannen mit einem dem Haltegrundelement 24 gegenüberliegend an der zweiten Seitenfläche 9 angeordneten Element - entlang der Längsachse 6 karosseriefest verspannt werden.

Das zweite Teil 25 ist Teil eines nicht gezeigten Wischerantriebs, der über das Entkopplungselement 2 mit dem gehäusefesten ersten Teil 22 elastisch verbunden ist. Durch auftretenden Kräfte und Momente entsteht insbesondere eine Bewegung des zweiten Teils 25 gegenüber dem ersten Teil 22 in Richtung der Längsachse 6 (Pfeil 33). Durch die Vergrößerung der Stirnfläche 28 des Einsetzabschnitts 26 wird eine gleichbleibend große Kontaktfläche 34 zwischen der Stirnfläche 28 des Einsetzabschnitts 26 und dem Entkopplungselementvorsprung 12 am Nutgrund 16 der Aufnahmevertiefung 5 gewährleistet. Eine entsprechende Belastungssituation mit einer Axialverschiebung des zweiten Teils 25 gegenüber dem ersten Teil 22 und dem Entkopplungselement ist in Figur 3 gezeigt. Durch die gleichbleibend große Kontaktfläche 34 sind die Belastungen des Entkopplungselements 2 bei der erfindungsgemäßen Entkopplungseinrichtung soweit reduziert, dass ein Verschleißen des Entkopplungselements 2 gegenüber einer Entkopplungseinrichtung 1 mit einem Einsetzabschnitt 26 ohne die die Stirnfläche 28 vergrößernden Einsetzabschnittsvorsprünge 31, 32 deutlich reduziert ist. Der Einsetzabschnitt 26 der erfindungsgemäßen Entkopplungseinrichtung 1 weist einen Vorsprung 35 auf, der sich im Bereich des Entkopplungselementvorsprungs 13 an der Mantelfläche 3 des Entkopplungselements abstützt.

Die Figur 3 zeigt die Entkopplungseinrichtung 1, wobei das zweite Teil 24 gegenüber dem ersten Teil 21 in Richtung der Längsachse 6 verschoben ist. Mit einer gestrichelten Linie ist die entsprechende Kontur eines nicht erfindungsgemäßen, verschobenen Einsetzabschnitts ohne Einsetzabschnittvorsprünge 31, 32 gezeigt. Bei einem derart ausgebildeten Einsetzabschnitt ergibt sich bei axial gegenüber dem ersten Teil verlagertem zweiten Teil eine verringerte Kontaktfläche zwischen der Stirnfläche des Einsetzabschnitts und dem Entkopplungselementvorsprung 12 am Nutgrund 16 der Aufnahmevertiefung des Entkopplungselements 2.

## Patentansprüche

1. Entkopplungseinrichtung (1), insbesondere für ein Fahrzeug, vorzugsweise Kraftfahrzeug, mit einem ersten Teil (22), einem zweiten Teil (25) und einem Entkopplungselement (2), wobei zur elastischen Material bestehende ersten Teil (22) mit dem zweiten Teil (25) das aus einem elastischen Material bestehende Entkopplungselement (2) zwischen den beiden Teilen angeordnet ist, wobei das Entkapplungselement (2) an dem ersten Teil (22) gehalten ist und eine nutförmige Aufnahmevertiefung (5) aufweist, in die das zweite Teil (25) mit einem Einsetzabschnitt (26) eingreift, wobei die nutförmige Aufnahmevertiefung (5) - im Querschnitt gesehen - am Nutgrund und an mindestens einer Nutwandung zueinander mit Abstand liegende, als Wülste einstückig mit dem Entkopplungselement (2) ausgebildete Entkopplungselementvorsprünge (12) aufweist und eine zwischen den Entkopplungselementvorsprüngen (12) liegende Zone der Aufnahmevertiefung eine Hinterschneidung (19, 20) bildet, und wobei der Einsetzabschnitt (26) eine mit dem zugeordneten Entkopplungselementvorsprung (12) zusammenwirkende Stirnfläche aufweist, **dadurch gekennzeichnet, dass** der Einsetzabschnitt (26) zur Vergrößerung seiner Stirnfläche (28) in die Hinterschneidung (19,20) mit einem einstückig an ihm ausgebildeten Einsetzabschnittsvorsprung (31,32) hineinragt, dessen Kontur vollflächig mit der Hinterschneidung (19,20) in der Aufnahmevertiefung (5) zusammenwirkt.

2. Entkopplungseinrichtung nach Anspruch 1, **dadurch gekennzeichnet, dass** die Aufnahmevertiefung (5) zwei Nutwandungen (17,18) aufweist, die beide mit jeweils einem Entkopplungselementvorsprung (13,14) versehen sind, wobei zwischen dem Entkopplungselementvorsprung (12) des Nutgrunds (16) und den Entkopplungselementvorsprüngen (13,14) der Nutwandungen (17,18) jeweils eine Zone der Aufnahmevertiefung liegt, die jeweils eine Hinterschneidung (19,20) bildet.

3. Entkopplungseinrichtung nach einem der vorhergehenden Ansprüche, **dadurch gekennzeichnet, dass** der Einsetzabschnitt (26) zur Vergrößerung seiner Stirnfläche (28) in die Hinterschneidungen (19,20) mit Einsetzabschnittsvorsprüngen (31,32) hineinragt.

4. Entkopplungseinrichtung nach einem der vorhergehenden Ansprüche, **dadurch gekennzeichnet, dass** die Entkopplungselementvorsprünge (12,13,14,15) einstückig am Entkopplungselement (2) ausgebildet sind.

5. Entkopplungseinrichtung nach einem der vorhergehenden Ansprüche, **dadurch gekennzeichnet, dass** das Entkopplungselement (2) als rotationssymmetrisches Bauteil ausgebildet ist.

6. Entkopplungseinrichtung nach einem der vorhergehenden Ansprüche, **dadurch gekennzeichnet, dass** die Aufnahmevertiefung (5) eine Ringnut (4) ist.

7. Entkopplungseinrichtung nach einem der vorhergehenden Ansprüche, **dadurch gekennzeichnet, dass** das Entkopplungselement (2) am ersten Teil (22) durch Eingreifen eines Haltevorsprungs (23) des ersten Teils (22) in einem zentralen Durchbruch (7) des Entkopplungselements (2) gehalten oder mit gehalten ist.

8. Entkopplungseinrichtung nach einem der vorhergehenden Ansprüche, **dadurch gekennzeichnet, dass** der Einsetzabschnitt (26) ganz oder teilweise von einem Randbereich (27) eines Durchbruchs oder einer randoffenen Ausnehmung des zweiten Teils (25) gebildet ist.

## Claims

1. Decoupling device (1), in particular for a vehicle, preferably a motor vehicle, with a first part (22), a second part (25) and a decoupling element (2), wherein, for the elastic connection of the first part (22) to the second part (25), the decoupling element (2), which consists of an elastic material, is arranged between the two parts, wherein the decoupling element (2) is held on the first part (22) and has a groove-shaped receiving depression (5) in which the second part (25) engages by means of an insertion section (26), wherein the groove-shaped receiving depression (5) - as seen in cross section - has decoupling element projections (12) which are located at a distance from one another on the groove base and on at least one groove wall and are formed integrally with the decoupling element (2) as beads, and a receiving depression zone located between the decoupling element projections (12) forms an undercut (19, 20), and wherein the insertion section (26) has an end surface which interacts with the associated decoupling element projection (12), **characterized in that** the insertion section (26), in order to increase the end surface (28) thereof, projects into the undercut (19, 20) by means of an insertion section projection (31, 32) which is formed integrally thereon and the contour of which interacts over the full surface area with the undercut (19, 20) in the receiving depression (5).

2. Decoupling device according to Claim 1, **characterized in that** the receiving depression (5) has two groove walls (17, 18) which are each provided with a respective decoupling element projection (13, 14), and a receiving depression zone is located in each case between the decoupling element projection (12) of the groove base (16) and the decoupling element projections (13, 14) of the groove walls (17, 18) and forms respective undercuts (19, 20).

3. Decoupling device according to one of the preceding claims, **characterized in that** the insertion section (26), in order to increase the end surface (28) thereof, projects into the undercuts (19, 20) by means of insertion section projections (31, 32).

4. Decoupling device according to one of the preceding claims, **characterized in that** the decoupling element projections (12, 13, 14, 15) are formed integrally on the decoupling element (2).

5. Decoupling device according to one of the preceding claims, **characterized in that** the decoupling element (2) is designed as a rotationally symmetrical component.

6. Decoupling device according to one of the preceding claims, **characterized in that** the receiving depression (5) is an annular groove (4).

7. Decoupling device according to one of the preceding claims, **characterized in that** the decoupling element (2) is held on or by the first part (22) by a holding projection (23) of the first part (22) engaging in a central aperture (7) in the decoupling element (2).

8. Decoupling device according to one of the preceding claims, **characterized in that** the insertion section (26) is formed entirely or partially by an edge region (27) of an aperture or by a recess open at the edge of the second part (25).

## Revendications

1. Dispositif de découplage (1), en particulier pour un véhicule, de préférence un véhicule automobile, comprenant une première partie (22), une deuxième partie (25) et un élément de découplage (2), l'élément de découpage (2) constitué d'un matériau élastique, pour la connexion élastique de la première partie (22) à la deuxième partie (25), étant disposé entre les deux parties, l'élément de découplage (2) étant maintenu sur la première partie (22) et présentant un renfoncement de réception en forme de rainure (5), dans lequel la deuxième partie (25) vient en prise avec une portion d'insertion (26), le renfoncement de réception en forme de rainure (5) - vu en section transversale - présentant au fond de la rainure et sur au moins une paroi de la rainure des saillies d'élément de découplage (12) disposées à distance l'une de l'autre et réalisées sous forme de bourrelet d'une seule pièce avec l'élément de découplage (2), et une zone du renfoncement de réception située entre les saillies d'élément de découplage (12) formant une contre-dépouille (19, 20), et la portion d'insertion (26) présentant une face frontale coopérant avec la saillie d'élément de découplage (12) associée, **caractérisé en ce que** la portion d'insertion (26), pour augmenter sa face frontale (28), pénètre dans la contre-dépouille (19, 20) avec une saillie de portion d'insertion (31, 32) réalisée d'une seule pièce sur elle, dont le contour coopère avec toute sa surface avec la contre-dépouille (19, 20) dans le renfoncement de réception (5).

2. Dispositif de découplage selon la revendication 1, **caractérisé en ce que** le renfoncement de réception (5) présente deux parois de rainure (17, 18), qui sont toutes deux pourvues d'une saillie d'élément de découplage respective (13, 14), une zone du renfoncement de réception se trouvant à chaque fois entre la saillie d'élément de découplage (12) du fond de rainure (16) et les saillies d'élément de découplage (13, 14) des parois de rainure (17, 18), laquelle zone forme à chaque fois une contre-dépouille (19, 20).

3. Dispositif de découplage selon l'une quelconque des revendications précédentes, **caractérisé en ce que** la portion d'insertion (26), pour augmenter sa face frontale (28), pénètre dans les contre-dépouilles (19, 20) avec des saillies de portion d'insertion (31, 32).

4. Dispositif de découplage selon l'une quelconque des revendications précédentes, **caractérisé en ce que** les saillies d'élément de découplage (12, 13, 14, 15) sont réalisées d'une seule pièce sur l'élément de découplage (2).

5. Dispositif de découplage selon l'une quelconque des revendications précédentes, **caractérisé en ce que** l'élément de découplage (2) est réalisé sous forme de composant à symétrie de révolution.

6. Dispositif de découplage selon l'une quelconque des revendications précédentes, **caractérisé en ce que** le renfoncement de réception (5) est une rainure annulaire (4).

7. Dispositif de découplage selon l'une quelconque des revendications précédentes, **caractérisé en ce que** l'élément de découplage (2) est maintenu ou maintenu conjointement sur la première partie (22) par engagement d'une saillie de retenue (23) de la première partie (22) dans un orifice central (7) de l'élément de découplage (2).

8. Dispositif de découplage selon l'une quelconque des revendications précédentes, **caractérisé en ce que** la portion d'insertion (26) est formée complètement ou en partie par une région de bord (27) d'un orifice ou d'un évidement ouvert aux bords de la deuxième partie (25).
